# EUROPEAN PATENT APPLICATION

(11) **EP 4 184 673 A1**
(43) Date of publication of application: **24.05.2023**
(21) Application number: 21218505.2
(22) Date of filing: 31.12.2021
(51) Int. Cl.: H01M 50/147, H01M 50/15, H01M 50/159, H01M 50/176, H01M 50/188, H01M 50/19, H01M 50/342, H01M 50/553, H01M 50/562

(54) **POWER BATTERY TOP COVER PLATE STRUCTURE**

(30) Priority: 23.11.2021 CN 202111393488
(71) Applicant: Ningbo Zhenyu Auto Parts Co., Ltd., Ningbo Southern Binhai New Area, Ninghai County Ningbo City Zhejiang Province (CN)
(72) Inventor: HE, Shiya, Ningbo City (CN); CHEN, Chong, Ningbo City (CN); DAI, Qidi, Ningbo City (CN)
(74) Representative: Cabinet Chaillot

(57) **Abstract**

A power battery top cover plate structure is disclosed in the present invention. A first protrusion protruding obliquely outwards is arranged on a battery pole, the battery pole and a connecting body of a lower insulator are placed in a pole hole of a top cover sheet, and then an annular area formed by a combination of an annular first protrusion on the battery pole and a locking block on the pole hole is wrapped by plastic to form an upper insulator, thus completing fixed installation of the battery pole and the lower insulator. The arrangement reduces installation accessories, reduces production costs by more than %, and at the same time improves the production efficiency, so that the yield and product quality are greatly improved.

## Description

### Technical Field

The present invention relates to the technical field of power lithium batteries, and in particular, to a power battery top cover plate structure.

### Related Art

Power battery poles are mainly used in power batteries of new energy vehicles, and the power batteries mainly store input electric energy to prepare power supply when the new energy vehicles are running. However, in the related art, the poles are formed by stamping and each equipped with an aluminum ring for installation. During installation on a top cover sheet, the pole must be installed on the top cover sheet through the aluminum ring and a welding process. Therefore, there are many installation processes, so that the installation of the pole is more time-consuming, and poor welding easily occurs during the welding. Moreover, the production cost is high, and at the same time, a negative pole is formed by the welding a copper plate and an aluminum plate through friction welding; as a result, the welding is easy to fall off and the safety system is low.

### SUMMARY

An objective of the present invention is to design a power battery top cover plate structure to solve the above technical shortcomings, and a specific structure is described as follows.

A power battery top cover plate structure designed in the present invention includes a top cover sheet, at least one upper insulator, at least one lower insulator, and at least one power battery pole, wherein the top cover sheet includes at least one pole hole, and a power battery pole is placed in the pole hole;
the power battery pole includes a pole body, the pole body includes a pole portion and a connecting portion located on the pole portion, the connecting portion includes a first protrusion located on a root on the pole portion or located on a circumferential side of the pole portion and a second protrusion located on the pole portion, and a locking recess portion for limiting an axial movement of the pole body is formed between the first protrusion and the second protrusion;
an opening edge of the pole hole is provided with a locking block extending toward an interior of the pole hole, and the upper insulator is provided with a locking recess, a locking protrusion, and a concave positioning portion, the lower insulator includes a through hole corresponding to a position of the pole hole and a connecting body located at an opening edge of the through hole, the connecting body is located between the second protrusion and the pole hole, and the connecting body is provided with a blocking portion;
the upper insulator covers the locking block and the second protrusion so that the locking block is correspondingly embedded in the locking recess, the locking protrusion is embedded in the locking recess portion so that a space between the locking block and the locking recess portion is filled, the first protrusion is correspondingly embedded in the concave positioning portion, and the second protrusion and the blocking portion are locked in position with each other; and
an explosion-proof valve is provided on the top cover sheet, and the explosion-proof valve includes a blasting score.

Preferably, a seal is embedded in the locking recess portion, and side walls of the seal are respectively attached to an inner wall of the locking recess portion, an outer wall of the locking block, an outer wall of the locking protrusion, and an edge surface of the connecting body located on an upper side of the blocking portion.

Preferably, the first protrusion is arranged obliquely to the outside, and the concave positioning portion is arranged obliquely to match the obliquely arranged second protrusion.

Preferably, the first protrusion includes a conical ring with an upper end diameter greater than a lower end diameter, the concave positioning portion is a conical annular cavity with an upper end diameter greater than a lower end diameter, and the conical ring of the power battery pole is correspondingly embedded in the conical annular cavity for positioning.

Preferably, a concave portion is formed between the first protrusion and an outer wall of the pole portion, and a convex portion located on the side of the concave positioning portion on the upper insulator is correspondingly embedded in the concave portion of the power battery. Preferably, a third protrusion is arranged on the first protrusion, and the third protrusion of the power battery pole is correspondingly embedded in a third concave positioning portion of the concave positioning portion.

Preferably, a baffle is arranged on an upper side of an opening of the locking recess, and the baffle is attached to an outer wall of the locking block.

Preferably, the explosion-proof valve further includes a rupture disk body; the rupture disk body is welded to or arranged integrally with a top cover sheet body, the rupture disk body is provided with a first step to form a first surface a and a second surface b with a height difference, the first surface a is located outside an edge of the second surface b, the second surface b is provided with an edge connection area and a central pressure release area, a connecting portion and a blasting score disconnected at the connecting portion are provided between the edge connection area and the central pressure release area, the central pressure release area is provided with a second step to form a third surface c and a fourth surface d with a height difference on the second surface, the third surface c is located outside an edge of the fourth surface d, and the blasting score is C-shaped on a surface of the central pressure release area.

Based on the explosion-proof valve, the connecting portion is arranged between the edge connection area and the central pressure release area to form the disconnected blasting score. When an internal pressure of the battery reaches a set value, the blasting score cracks to release the pressure. The central pressure release area will not be separated from the rupture disk body due to the limitation of the connecting portion. Two steps are arranged on the rupture disk body to provide a shrinkage space for the product, so that the stress is released. The central pressure release area is not easy to swell due to a slight pressure, thus improving the stability of blasting.

Preferably, a step body is arranged on the connecting body, a limiting step is arranged on the pole hole, and the step body and the limiting step are locked in position with each other.

Preferably, the second protrusion is provided with a first recess for limiting circumferential rotation of the pole body, and an inner wall of the concave positioning portion is provided with a first positioning bump, or the second protrusion is provided with a first positioning bump for limiting circumferential rotation of the pole body, and an inner wall of the concave positioning portion is provided with a first recess; and the first positioning bump is correspondingly embedded in the first recess.

Preferably, the pole hole is further provided with a second recess and the lower insulator is further provided with a second bump, or the pole hole is further provided with a second bump and the lower insulator is further provided with a second recess; and the second bump is correspondingly embedded in the second recess.

In a power battery top cover plate structure designed in the present invention, by arranging a first protrusion, a second protrusion, and a locking recess portion, after the second protrusion of a battery pole is placed in a blocking portion, the battery pole is placed in a pole hole of the top cover sheet while positioning a lower insulator on a lower surface of the top cover sheet, and in this case, plastic is injection-molded on an area formed integrally by a locking block, a concave portion, and the first protrusion, for fixedly installing the lower insulator and the battery pole in the pole hole, which reduces installation processes, and reduces production costs by more than 20%.

### BRIEF DESCRIPTION OF THE DRAWINGS

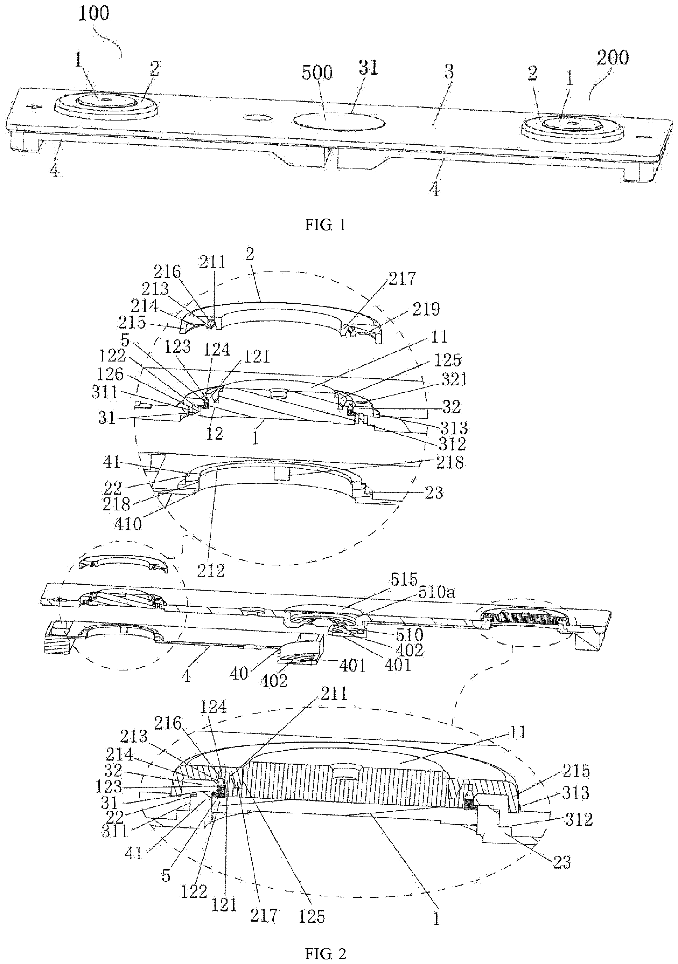

FIG. 1 is a schematic view of an upper surface structure of a circular top cover plate;
FIG. 2 is an exploded view 1;

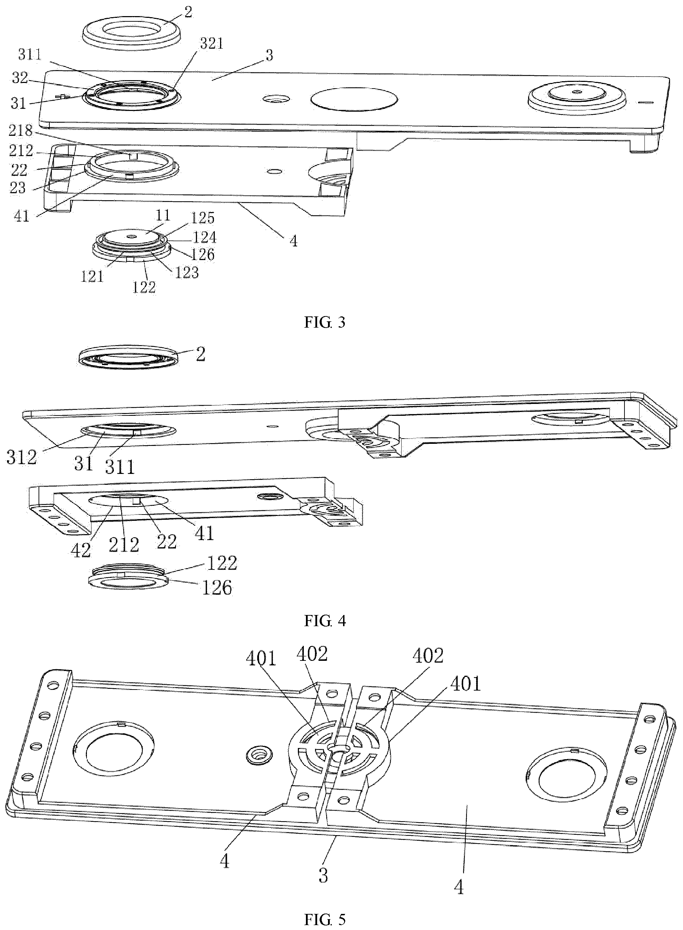

FIG. 3 is an exploded view 2;
FIG. 4 is an exploded view 3;
FIG. 5 is a schematic view of a lower surface structure of a circular top cover plate;

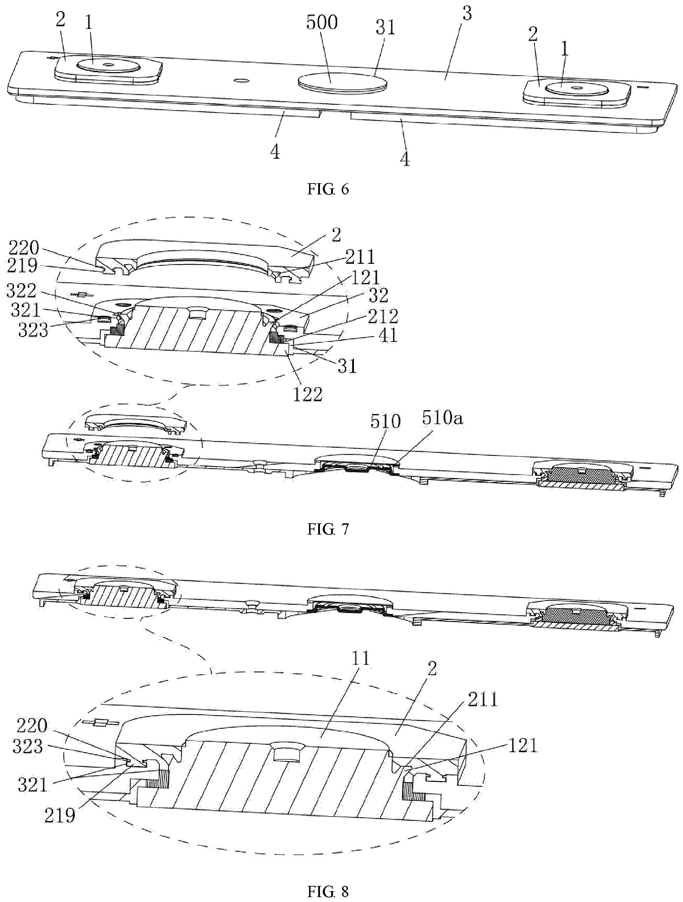

FIG. 6 is a schematic view of an upper surface structure of a circular top cover plate;
FIG. 7 is a sectional view of a square top cover plate;
FIG. 8 is an exploded view 1;

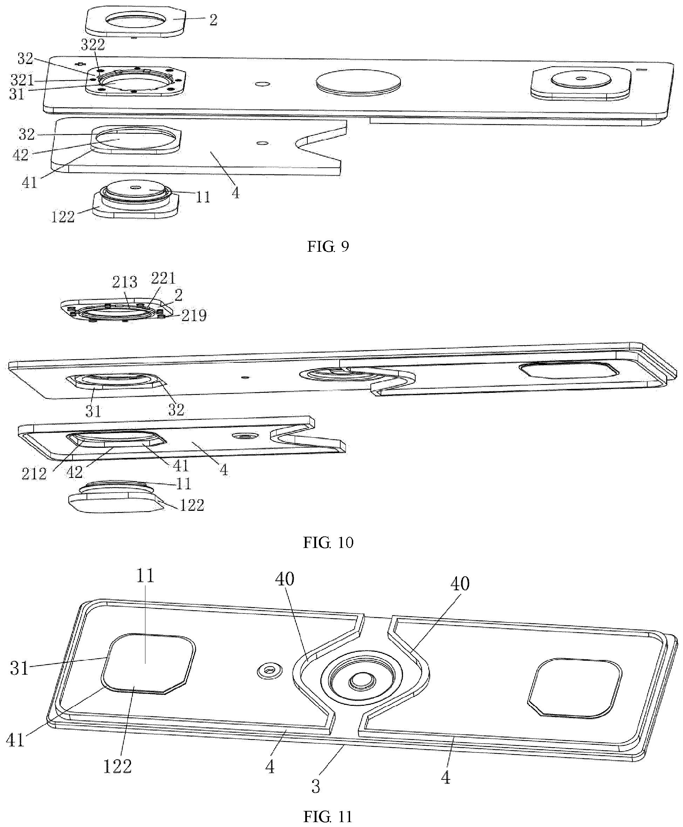

FIG. 9 is an exploded view 2;
FIG. 10 is an exploded view 3;
FIG. 11 is a schematic view of a lower surface structure of a square top cover plate;

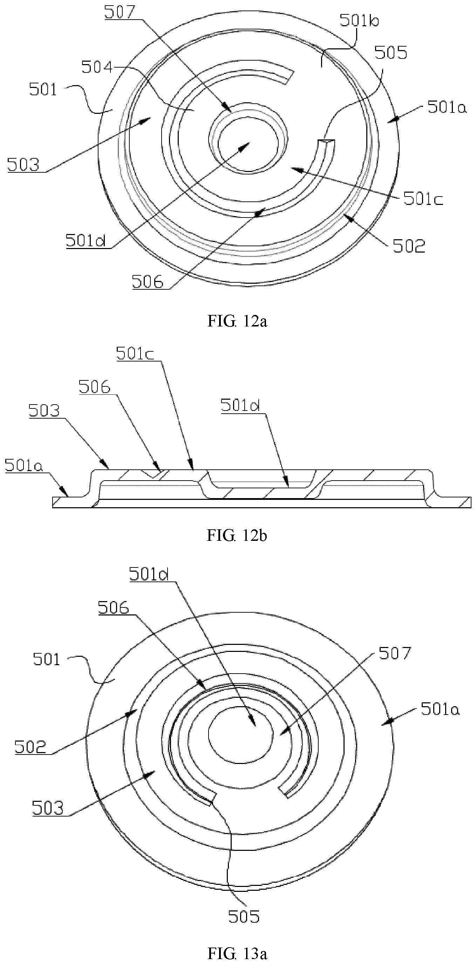

FIG. 12a is a perspective view of Embodiment 1 of a power battery rupture disk according to an embodiment of the present invention;
FIG. 12b is a sectional view of Embodiment 1 of a power battery rupture disk according to an embodiment of the present invention;
FIG. 13a is a perspective view of Embodiment 2 of a power battery rupture disk according to an embodiment of the present invention;
FIG. 13b is a sectional view of Embodiment 2 of a power battery rupture disk according to an embodiment of the present invention;
FIG. 14a is a perspective view of Embodiment 1 of a power battery top cover sheet according to an embodiment of the present invention;
FIG. 14b is a sectional view of Embodiment 1 of a power battery top cover sheet according to an embodiment of the present invention after a protective film is pasted;
FIG. 15 is a sectional view of Embodiment 2 of a power battery top cover sheet according to an embodiment of the present invention without an exhaust groove arranged; and
FIG. 16 is a sectional view of Embodiment 3 of a power battery top cover sheet according to an embodiment of the present invention without an exhaust groove arranged.

Reference numerals are as follows:
1. Power battery pole, 11. Pole portion, 12. Connecting portion, 121. First protrusion, 122. Second protrusion, 123, Locking recess portion, 124. Third protrusion, 125. Concave portion, 126. First recess, 2. Upper insulator, 211. Concave positioning portion, 212. Blocking portion, 213. Locking protrusion, 214. Locking recess, 215. Baffle, 216. Third concave positioning portion, 217. Convex portion, 218. First positioning bump, 219. Convex post, 220. Limiting ring groove, 221. Positioning block, 22. Second bump, 23. Step body, 3. Top cover sheet, 31. Pole hole, 311. Second recess, 312, Limiting step, 32. Locking block, 321. First positioning groove, 322. Second positioning groove, 323. Limiting convex ring, 4. Lower insulator, 40. Recess, 401. Protective shell, 402. Pressure release hole, 42. Through hole, 100. Positive pole, 200. Negative pole, 500. Explosion-proof valve;
501. Rupture disk body, 501a. First surface, 501b. Second surface, 501c. Third surface, 501d. Fourth surface, 502. First step, 503. Edge connection area, 504. Central pressure release area, 505. Connecting portion, 506. Blasting score, 507. Second step, 508. First convex portion, 510. Top cover sheet body, 510a. Explosion-proof hole, 511. First groove, 512. First perforation, 513. Second convex portion, 514. Second perforation, 515. Protective film, 516. Third convex portion, 517. Exhaust groove.

### DETAILED DESCRIPTION

The technical solutions in embodiments of the present invention will be described clearly and completely through the accompanying drawings in the embodiments of the present invention. Apparently, the described embodiments are merely a part of embodiments of the present invention, instead of all embodiments. Based on the embodiments of the present application, all other embodiments derived by those of ordinary skill in the art shall all fall within the protection scope of the present application.

### Embodiment:

As shown in the accompanying drawings, a power battery top cover plate structure described in this embodiment is characterized by including a top cover sheet 3, at least one upper insulator 2, at least one lower insulator 4, and at least one power battery pole 1. The top cover sheet 3 includes at least one pole hole 31, the power battery pole 1 is placed in the pole hole 31, wherein the lower insulator 4 is attached to a lower surface of the top cover sheet 3, and a connecting body on the lower insulator 4 is positioned between the power battery pole 1 and the pole hole, so that after the upper insulator 2 is injection molded, the battery pole and the lower insulator 4 are installed on the pole hole for preliminary preparation. At the same time, the numbers of the upper insulators 2, the lower insulators 4, and the power battery poles 1 may all be set to two. The two power battery poles 1 are respectively a positive pole and a negative pole. A set of upper insulator 2 and lower insulator 4 is used for installing the positive pole in one pole hole, and the other set of upper insulator 2 and lower insulator 4 is used for installing the negative pole in the other pole hole.

The power battery poles each includes a pole body, the pole body includes a pole portion 11 and a connecting portion 12 located on the pole portion 11. The connecting portion 12 includes a first protrusion 121 located on a root on the pole portion 11 or located on a circumferential side of the pole portion 11 and a second protrusion 122 located on the pole portion 11, and a locking recess portion 123 for limiting an axial movement of the pole body is formed between the first protrusion 121 and the second protrusion 122. The pole body is made of an aluminum material or a copper-aluminum composite material, and the aluminum or copper-aluminum composite material is integrally stamped to form the pole structure of this embodiment. Generally, the aluminum pole is used as a positive pole 100, and the copper-aluminum composite pole is used as a negative pole 200. A pit is arranged in the middle of a top surface of the pole, where the second protrusion 122 is also an annular convex ring, and arranged at the root of the pole portion 11. Moreover, the first protrusion may be implemented, according to actual conditions, as a square ring-shaped protrusion or a circular ring-shaped protrusion, and the upper insulator 2 may be implemented, according to actual situations, as a square ring-shaped insulator or a circular ring-shaped insulator.

An opening edge of the pole hole 31 is provided with a locking block 32 extending toward an interior of the pole hole 31, and the upper insulator 2 is provided with a locking recess 214, a locking protrusion 213, and a concave positioning portion 211. The lower insulator 4 includes a through hole 42 corresponding to the position of the pole hole 31 and a connecting body located at the opening edge of the through hole 42. The connecting body is located between the second protrusion and the pole hole, and is a connecting ring, and the connecting body is provided with a blocking portion 212. The upper insulator 2 covers the locking block 32 and the second protrusion 122, so that the locking block 32 is correspondingly embedded in the locking recess 214, and the locking protrusion 213 is embedded in the locking recess portion 123, so that the space between the locking block 32 and the locking recess portion 123 is filled. The first protrusion 121 is correspondingly embedded in the concave positioning portion 211, and the second protrusion 122 and the blocking portion 212 are locked in position with each other. The top cover sheet 3 and the locking block 32 are combined with each other to form an aluminum plate with an integrated structure. The aluminum plate, the lower insulator, and the pole are positioned in the injection mold, and the pole is placed in the pole hole 31. At this time, liquid plastic covers and wraps the locking block, the concave portion, the first protrusion, and an annular area formed by integrating the first protrusion and the locking position, for forming the upper insulator 2 of a ring-shaped structure according to the cavity structure, the locking block, the concave portion, and the first protrusion. The plastic is made of a PPS material, and the locking block 32, the locking recess 214, the locking protrusion 213, and the blocking portion 212 are all of a ring-shaped structure.

In the above, in order to enhance the connection strength between the upper insulator 2 and the locking block, a plurality of first positioning grooves 321 and a plurality of second positioning grooves 322 are arranged on a top surface of the locking block 32, a plurality of convex posts 219 respectively matching the first positioning grooves 321 are arranged on the inner wall of the locking recess 214, and the convex posts 219 are correspondingly inserted into the first positioning grooves 321. A plurality of positioning blocks 221 respectively matching the second positioning grooves 322 are arranged on the outer wall of the locking protrusion 213, and the positioning blocks 221 are correspondingly inserted into the second positioning grooves 322. The positioning blocks 221 and the second positioning grooves 322 may be selected to be retained or removed according to actual conditions.

Preferably, a limiting convex ring 323 is arranged on the inner wall of the first positioning groove 321, and a limiting ring groove 220 is arranged on the convex post 219. The limiting convex ring 323 is inserted into the limiting ring groove 220 for positioning, thus improving the connection firmness of connecting the upper insulator 2 and the annular locking block 32.

The top cover sheet 3 is provided with an explosion-proof valve 500, and the explosion-proof valve 500 includes a blasting score 506. When an internal pressure of the battery exceeds a preset pressure, the explosion-proof valve may burst open to release the pressure.

In another embodiment, when the first protrusion 121 is a square ring-shaped protrusion and the upper insulator 2 is a square ring-shaped insulator, the corresponding connecting body 41 is a square connecting ring, the pole hole 31 is a square pole hole, and the square connecting ring is fitted at a port of the square pole hole and is limited by the locking block 32. The through hole 42 is a square through hole 42, and the square ring-shaped protrusion is fitted in the square hole to realize positioning and installation of the battery pole and the connecting body 41 in the pole hole 31.

Based on the above, end portions of the two lower insulators 4 are provided with recesses 40 to avoid the explosion-proof holes 510a.

Preferably, a protective shell 401 is arranged at the recess 40, and a pressure release hole 402 is arranged on the protective shell 401 to protect the explosion-proof valve 500. The protective shell 401 may be selectively arranged according to the structure of the explosion-proof valve 500.

In the embodiment, a seal 5 is embedded in the locking recess portion 123, and side walls of the seal 5 are respectively attached to the inner wall of the locking recess portion 123, the outer wall of the locking block 32, the outer wall of the locking protrusion 213, and the inner wall of the blocking portion 212. The seal 5 is an annular seal ring, which is fitted in the annular locking recess portion on the pole portion. The structure arrangement enables the air tightness of the pole portion on the top cover sheet more in line with production requirements, thus improving the production yield of the top cover plate.

In the embodiment, the first protrusion 121 is arranged obliquely to the outside; the concave positioning portion 211 is arranged obliquely to match the obliquely arranged first protrusion 121. The structural design facilitates fixing the battery pole and the lower insulator 4 in the pole hole after the upper insulator 2 structure is injection-molded, which improves the production performance, so that the pole is connected to the pole hole 31 more firmly through the plastic, thus preventing the plastic from falling off during use.

Preferably, the first protrusion 121 includes a conical ring with an upper end diameter greater than a lower end diameter, the concave positioning portion 211 is a conical annular cavity with an upper end diameter greater than a lower end diameter, and the conical ring of the power battery pole 1 is correspondingly embedded in the conical annular cavity for positioning.

Preferably, a concave portion 125 is formed between the first protrusion 121 and the outer wall of the pole portion 11, and a convex portion 217 on the side of the concave positioning portion 211 on the upper insulator 2 is correspondingly embedded in the concave portion 125 of the power battery. The structure arrangement enhances the connection strength between the plastic and the pole, and the concave portion 125 and the convex portion 217 are both ring-shaped structures.

In this embodiment, the explosion-proof valve 500 further includes a rupture disk body 501, the rupture disk body 501 is provided with a first step 502 to form a first surface 501a and a second surface 501b with a height difference, and the first surface 501a is located outside an edge of the second surface 501b. The second surface 501b is provided with an edge connection area 503 and a central pressure release area 504, a connecting portion 505 and a blasting score 506 disconnected at the connecting portion 505 are provided between the edge connection area 503 and the central pressure release area 504, the central pressure release area 504 is provided with a second step 507 to form a third surface 501c and a fourth surface 501d with a height difference on the second surface 510b, and the third surface 501c is located outside an edge of the fourth surface 501d. When the rupture disk is subjected to a pressure exceeding a set burst pressure, the central pressure release area 504 at the blasting score 506 can rupture and exhaust in time, and there is no slight leakage and exhaustion before the rupture.

Specifically, the blasting score 506 is C-shaped on the second surface 501b, and both ends of the blasting score 506 are connected to the two ends of the connecting portion 505, respectively. The blasting score 506 is arranged in a disconnected form to prevent the blasting score 506 from separating from the central pressure release area 504 during pressure release.

In this embodiment, the rupture disk body 501 is in the shape of a disc as a whole, and the blasting score 506 covers the second surface 501b in an angular range of about 260 degrees to 330 degrees.

Specifically, the cross section of the blasting score 506 is V-shaped, and the angle is 40 degrees to 120 degrees.

Preferably, the second surface 501b protrudes from the first surface 501a, and the bottom of the second surface 501b is recessed.

Arranging the first protrusion increases the bending, improves the strength of anti-stress, and meets the stability of the explosion-proof value.

As one of the implementations, preferably, the fourth surface 501d is recessed relative to the third surface 501c, and protrudes from the bottom surface of the second surface 501b.

The second step 507 is arranged to form a protrusion on the bottom surface of the second surface 501b, which enhances the structural strength, eliminates residual stress during processing, and prevents bulging and wrinkling of the central pressure release area 504 as the battery swells against the top cover sheet due to an internal slight pressure.

In this embodiment, a sectional angle of the blasting score 506 is 60 degrees to 120 degrees. The depth of the blasting score 506 is set according to an explosion-proof value of the product.

Preferably, the second step 507 is arranged obliquely, and an outer wall of a protruding part of the fourth surface 501d from the bottom surface of the second surface 501b is an inverted tapered surface.

As another implementation manner, preferably, the fourth surface 501d protrudes from the third surface 501c.

Specifically, the central pressure release area 504 is further provided with a first convex portion 508 that is away from the fourth surface 501d. Protrusions are provided on both the inner and outer sides of the central pressure release area 504, which can ensure a vertical shrinkage space of the product, and meet the stability of a blasting value of the product.

Preferably, the first step 502 is arranged obliquely, so that a connecting position of the first surface 501a and the second surface 501b is a tapered surface, and an inner side of the rupture disk body 501 corresponding to the first step 502 is also a tapered surface. The second step 507 is arranged obliquely, so that a connecting position of the third surface 501c and the fourth surface 501d is a tapered surface, and an outer wall of the first convex portion 508 is arranged obliquely, so that the outer wall of the first convex portion 508 is a tapered surface.

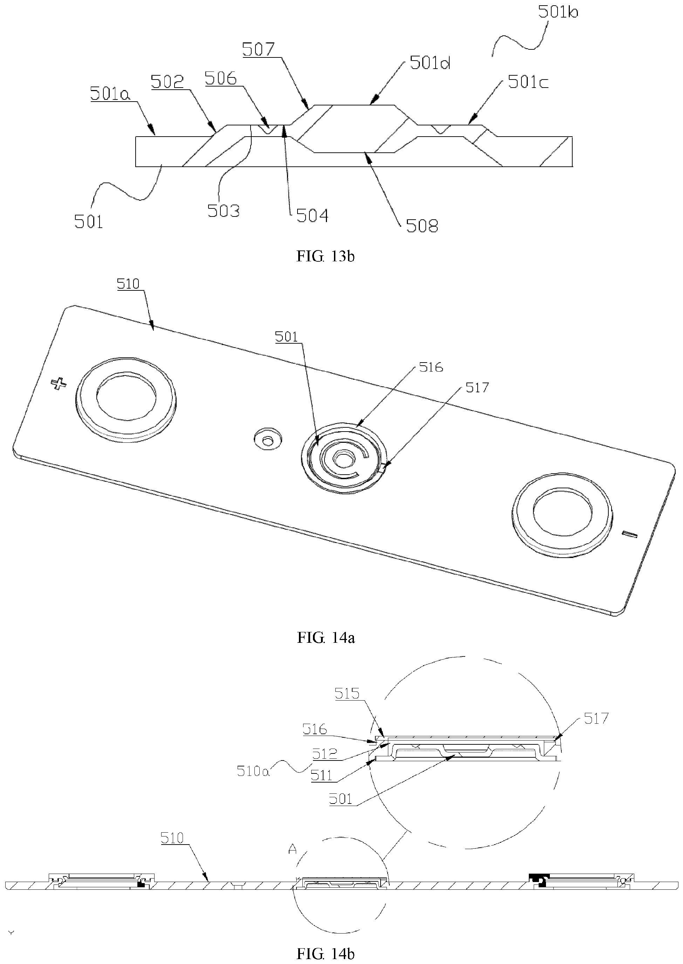

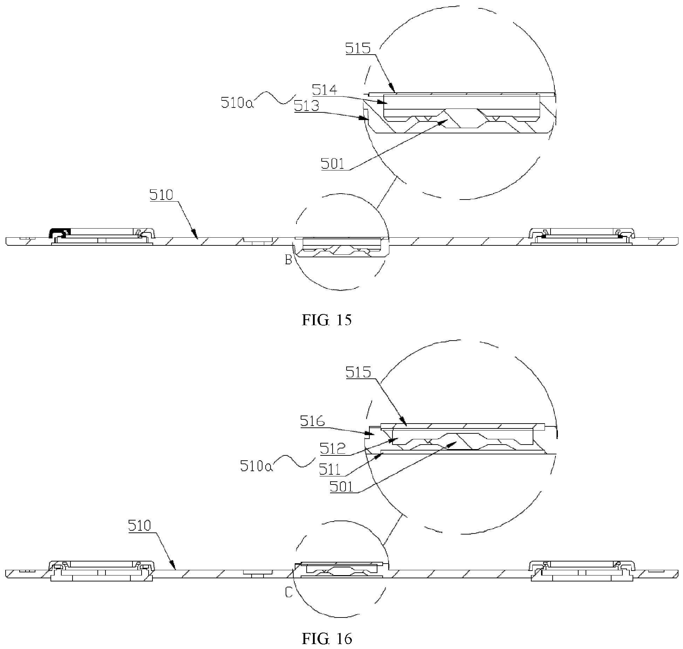

In this embodiment, a sectional angle of the blasting score 506 is 60 degrees to 120 degrees. The depth of the blasting score 506 is set according to an explosion-proof value of the product. As shown in FIG. 14a, FIG. 14b, FIG. 15 and FIG. 16, a power battery top cover sheet is further provided in the present invention, including a top cover sheet body 510. The top cover sheet body 510 is provided with an explosion-proof hole 510a, and the above power battery rupture disk is installed on the explosion-proof hole 510a.

Preferably, the rupture disk body 501 is welded to or arranged integrally with the top cover sheet body 510.

When the fourth surface 501d is recessed relative to the third surface 501c, the rupture disk body 501 is welded to the top cover sheet body 510. When the fourth surface 501d protrudes from the third surface 501c, the rupture disk body 501 and the top cover sheet body 510 are integrally formed. At this time, the explosion-proof hole 510a is divided into two unconnected grooves by the rupture disk body 501. As one of the implementations, preferably, the explosion-proof hole 510a includes a first groove 511 arranged on the bottom surface of the top cover sheet body 510, and the first groove 511 is provided with a first perforation 512 that penetrates the top cover sheet body 510. The rupture disk body 501 is fitted on the first groove 511.

In this embodiment, a distance between an edge portion of the first surface 501a of the rupture disk body 501 and an inner wall of the first groove 511 is 0.06 mm to 0.12 mm. During welding, welding is performed uniformly around a periphery between the first groove 511 and the outer edge of the rupture disk body 501, and a welding depth reaches more than 0.6 mm.

In this embodiment, the first step 502 is arranged to be perpendicular to the first surface 501a, and a gap between the first step 502 and the inner wall of the explosion-proof hole 510a is 0.1 mm and 0.2 mm, thus ensuring a vertical shrinkage space of the product and meeting the stability of the blasting value.

As another embodiment, preferably, the explosion-proof hole 510a includes a second convex portion 513 arranged on the bottom surface of the top cover sheet body 510, and the second convex portion 513 is provided with a second perforation 514 that penetrates the top cover sheet body 510. The rupture disk body 1 is fitted on the second convex portion 513.

Specifically, a protective film 515 is installed on the explosion-proof hole 510a, and there is a gap between the top surface of the rupture disk body 501 and the protective film 515, for ensuring that the rupture disk body 501 does not press against the protective film 515.

In this embodiment, the protective film 515 is pasted on the top cover sheet body 510.

Preferably, the top cover sheet body 510 is provided with a first slot located outside the explosion-proof hole 510a, and the protective film 515 is pasted on the first slot.

In this embodiment, an opening of the blasting score 506 is arranged toward the protective film 515, that is, arranged upward, or it may be arranged toward an inner side of the top cover sheet body 510, that is, arranged downward. When the blasting score 506 is arranged upward, the sectional angle of the blasting score 506 is 40 degrees to 120 degrees, and the depth of the blasting score 506 is preferably 0.05 mm to 0.25 mm.

As one of the implementations, preferably, a top edge of the explosion-proof hole 510a is provided with a third convex portion 516, and the protective film 515 is installed on the third convex portion 516.

Specifically, an exhaust groove 517 is arranged between the third convex portion 516 and the protective film 515. After the explosion-proof hole 510a is filmed, the air can be exhausted from the exhaust groove 517 during pressure release. When no exhaust groove 517 is arranged, the protective film 515 is provided with an exhaust hole.

Preferably, the third convex portion 516 is provided with a second slot located on an outer side of the explosion-proof hole 510a, and the protective film 515 is pasted on the second slot.

In this embodiment, the second slot is annular, and the exhaust groove 517 is arranged on the third convex portion 516 or the protective film 515. The exhaust groove 517 is arranged on the third convex portion 516 and located on an outer side of the second slot. The coverage angle of the exhaust groove 517 on the third convex portion 516 is 30 degrees to 60 degrees, and the depth of the exhaust groove is 0.3 mm to 0.5 mm.

In the above, the explosion-proof valve 500 is provided with a connecting portion between the edge connection area and the central pressure release area to form a disconnected blasting score. When an internal pressure of the battery reaches a set value, the blasting score cracks to release the pressure. The central pressure release area will not be separated from the rupture disk body due to the limitation of the connecting portion. Two steps are arranged on the rupture disk body to provide a shrinkage space for the product, so that the stress is released. The central pressure release area is not easy to swell due to a slight pressure, thus improving the stability of blasting.

In this embodiment, a third protrusion 124 is arranged on the first protrusion 121, and the third protrusion 124 of the power battery pole 1 is correspondingly embedded in a third concave positioning portion 216 of the concave positioning portion 211. The structural arrangement further enhances the connection strength between the plastic and the pole.

In this embodiment, a baffle 215 is arranged on an upper side of an opening of the locking recess 214, and the baffle 215 is attached to an outer wall of the locking block 32. The baffle 215 is preferably an annular baffle 215. A bottom end of the annular baffle 215 is inserted into an annular groove 313 on the periphery of the pole hole 31. The structure arrangement enables the positioning and installation of the upper insulator 2 on the aluminum plate firmer and more reliable, and improves the use performance.

In this embodiment, a step body 23 is arranged on the connecting body, a limiting step 312 is arranged on the pole hole 31, and the step body 23 and the limiting step 312 are locked in position with each other. The structure enables the upper insulator 2 to be positioned more reliably and improves the structural strength.

In this embodiment, the second protrusion 122 is provided with a first recess 126 for limiting circumferential rotation of the pole body, and an inner wall of the blocking portion 126 is provided with a first positioning bump 218, or the second protrusion 122 is provided with a first positioning bump 218 for limiting circumferential rotation of the pole body, and an inner wall of the blocking portion 212 is provided with a first recess 126. The first positioning bump 218 is correspondingly embedded in the first recess126. The structure enables the pole to be circumferentially positioned on the lower insulator 4, for preventing the pole from rotating circumferentially and affecting the battery performance during use. There may be a plurality of first positioning bumps 218 and a plurality of first recesses 126 according to actual conditions.

In the embodiment, the pole hole 31 is further provided with a second recess 311, the lower insulator 4 is further provided with a second bump 22, or the pole hole 31 is further provided with a second bump 22, and the lower insulator 4 is further provided with a second recess 311. The second bump 22 is correspondingly embedded in the second recess 311. The structure enables the lower insulator 4 to be circumferentially positioned on the pole hole 31, for preventing the lower insulator 4 from rotating circumferentially and affecting the battery performance during use.

The present invention is not limited to the above preferred embodiments. Anyone can derive other products in various forms under the enlightenment of the present invention. However, regardless of any changes in its shape or structure, any products that have technical solutions the same or similar to those of the present application fall within the protection scope of the present invention.

## Claims

1. A power battery top cover plate structure, **characterized by** comprising a top cover sheet (3), at least one upper insulator (2), at least one lower insulator (4), and at least one power battery pole (1), wherein the top cover sheet (3) comprises at least one pole hole (31), and the power battery pole (1) is placed in the pole hole (31);
the power battery pole (1) comprises a pole body, the pole body comprises a pole portion (11) and a connecting portion (12) located on the pole portion (11), the connecting portion (12) comprises a first protrusion (121) located on a root on the pole portion (11) or located on a circumferential side of the pole portion (11) and a second protrusion (122) located on the pole portion (11), and a locking recess portion (123) for limiting an axial movement of the pole body is formed between the first protrusion (121) and the second protrusion (122);
an opening edge of the pole hole (31) is provided with a locking block (32) extending toward an interior of the pole hole (31), and the upper insulator (2) is provided with a locking recess (214), a locking protrusion (213), and a concave positioning portion (211), the lower insulator (4) is attached to a lower surface of the top cover sheet, and the lower insulator (4) comprises a through hole (42) corresponding to a position of the pole hole (31) and a connecting body located at an opening edge of the through hole (42), the connecting body is located between the second protrusion and the pole hole, and the connecting body is provided with a blocking portion (212);
the upper insulator (2) covers the locking block (32) and the second protrusion (122) so that the locking block (32) is correspondingly embedded in the locking recess (214), the locking protrusion (213) is embedded in the locking recess portion (123) so that a space between the locking block and the locking recess portion is filled, the first protrusion (121) is correspondingly embedded in the concave positioning portion (211), and the second protrusion (122) and the blocking portion (212) are locked in position with each other;
an explosion-proof valve (500) is provided on the top cover sheet (3), and the explosion-proof valve (500) comprises a blasting score (506);
a seal (5) is embedded in the locking recess portion (123), and side walls of the seal (5) are respectively attached to an inner wall of the locking recess portion (123), an outer wall of the locking block (32), an outer wall of the locking protrusion (213), and an inner wall of the blocking portion (212);
the first protrusion (121) is arranged obliquely to the outside; the concave positioning portion (211) is arranged obliquely to match the obliquely arranged first protrusion (121); and
liquid plastic covers the locking block, the first protrusion, and an annular area formed between the first protrusion and the locking position, and wraps them to form the upper insulator (2) after being cooled and solidified, for fixing the power battery pole and the connecting body of the lower insulator (4) in the pole hole (31).

2. The power battery top cover plate structure according to claim 1, **characterized in that** the second protrusion (122) comprises a conical ring with an upper end diameter greater than a lower end diameter, the concave positioning portion (211) is a conical annular cavity with an upper end diameter greater than a lower end diameter, and the conical ring of the power battery pole (1) is correspondingly embedded in the conical annular cavity for positioning.

3. The power battery top cover plate structure according to claim 1, **characterized in that** a concave portion (125) is formed between the first protrusion (121) and an outer wall of the pole portion (11), and a convex portion (217) located on the side of the concave positioning portion (211) on the upper insulator (2) is correspondingly embedded in the concave portion (125) of the power battery.

4. The power battery top cover plate structure according to claim 1, **characterized in that** a third protrusion (124) is arranged on the first protrusion (121), and the third protrusion (124) of the power battery pole (1) is correspondingly embedded in a third concave positioning portion (216) of the concave positioning portion (211).

5. The power battery top cover plate structure according to claim 1, **characterized in that** a baffle (215) is arranged on an upper side of an opening of the locking recess (214), and the baffle (215) is attached to an outer wall of the locking block (32).

6. The power battery top cover plate structure according to claim 1, **characterized in that** the explosion-proof valve (500) further comprises a rupture disk body (501); the rupture disk body (501) is welded to or arranged integrally with a top cover sheet body (510), the rupture disk body (501) is provided with a first step (502) to form a first surface (501a) and a second surface (501b) with a height difference, the first surface (501a) is located outside an edge of the second surface (501b), the second surface (501b) is provided with an edge connection area (503) and a central pressure release area (504), a connecting portion (505) and a blasting score (506) disconnected at the connecting portion (505) are provided between the edge connection area (503) and the central pressure release area (504), the central pressure release area (504) is provided with a second step (507) to form a third surface (501c) and a fourth surface (501d) with a height difference on the second surface (510b), the third surface (501c) is located outside an edge of the fourth surface (501d), and the blasting score (506) is C-shaped on a surface of the central pressure release area (504).

7. The power battery top cover plate structure according to claim 1, **characterized in that** a step body (23) is arranged on the connecting body, a limiting step (312) is arranged on the pole hole (31), and the step body (23) and the limiting step (312) are locked in position with each other.

8. The power battery top cover plate structure according to claim 1, **characterized in that** the second protrusion (122) is provided with a first recess (126) for limiting circumferential rotation of the pole body, and an inner wall of the concave positioning portion (211) is provided with a first positioning bump (218), or the second protrusion (122) is provided with a first positioning bump (218) for limiting circumferential rotation of the pole body, and an inner wall of the concave positioning portion (211) is provided with a first recess (126); and
the first positioning bump (218) is correspondingly embedded in the first recess (126).

9. The power battery top cover plate structure according to claim 1, **characterized in that** the pole hole (31) is further provided with a second recess (311) and the lower insulator (4) is further provided with a second bump (22), or the pole hole (31) is further provided with a second bump (22) and the lower insulator (4) is further provided with a second recess (311); and
the second bump (22) is correspondingly embedded in the second recess (311).
